(19) Europäisches Patentamt / European Patent Office / Office européen des brevets

(11) **EP 2 317 362 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(51) Int Cl.:
**G02B 21/00** (2006.01)

(21) Anmeldenummer: **10013882.5**

(22) Anmeldetag: **22.10.2010**

(54) **Mikroskopisches Verfahren und Mikroskop mit gesteigerter Auflösung**

Microscopic method and microscope with improved resolution

Procédé microscopique et microscope doté d'une dissolution améliorée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2009 DE 102009051291**

(43) Veröffentlichungstag der Anmeldung:
**04.05.2011 Patentblatt 2011/18**

(73) Patentinhaber: **Carl Zeiss Microscopy GmbH 07745 Jena (DE)**

(72) Erfinder:
• **KLEPPE, Ingo**
  **07749 Jena (DE)**
• **NETZ, Ralf**
  **07745 Jena (DE)**
• **NOVIKAU, Yauheni**
  **07743 Jena (DE)**

(74) Vertreter: **Patentanwälte Geyer, Fehners & Partner mbB**
**Perhamerstrasse 31**
**80687 München (DE)**

(56) Entgegenhaltungen:
WO-A1-2004/053558    WO-A1-2007/009812
WO-A1-2007/109861    US-A1- 2009 147 354
US-A1- 2009 161 208    US-A1- 2009 219 607

• HEINTZMANN R ET AL: "Breaking the resolution limit in light microscopy", BRIEFINGS IN FUNCTIONAL GENOMICS AND PROTEOMICS, HENRY STEWART, LONDON, GB, Bd. 5, Nr. 4, 1. Januar 2006 (2006-01-01), Seiten 289-301, XP009094761, ISSN: 1473-9550, DOI: DOI:10.1093/BFGP/ELL036
• R. HEINTZMANN T.M. JOVIN C. CREMER.: "Saturated pattemed excitation microscopy - A concept for optical resolution improvement", J. OPT. SOC. AM. A, Bd. 19, Nr. 8, 20. Februar 2001 (2001-02-20), Seiten 1599-1609, XP001205618,

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 317 362 B1

**Beschreibung**

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung darstellende Beleuchtungsstrahlung beleuchtet und die dadurch angeregte Lumineszenzstrahlung mit geeigneten Detektoren erfasst. Üblicherweise ist dazu im Mikroskop ein dichroitischer Strahlteiler in Kombination mit Blockfiltern vorgesehen, die die Lumineszenzstrahlung von der Anregungsstrahlung abspalten und eine getrennte Beobachtung ermöglichen. Durch dieses Vorgehen ist die Darstellung einzelner, verschieden gefärbter Zellteile im Mikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe, lumineszieren.

Lumineszenz wird hier, wie allgemein üblich, als Oberbegriff für Phosphoreszenz und Fluoreszenz verstanden, erfasst also beide Prozesse. Soweit hier von Fluoreszenz gesprochen wird, ist das pars pro toto und nicht einschränken zu verstehen.

Zur Probenuntersuchung ist es auch bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene abbilden, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

US 5043570 beschreibt einen Versuch, die Auflösung durch "oversampling" zu erhöhen. Dies führt nicht zu einer deutlich verbesserten Auflösung unterhalb der Beugungsgrenze des Mikroskopes.

Prinzipiell ist die optische Auflösung eines Lichtmikroskops, auch die eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nicht-linearer Entvölkerungsprozesse kann weiter die Auflösung auf einen Faktor von bis zu 10 gegenüber einem beugungsbegrenzten konfokalen LSM angehoben werden. Ein solches Verfahren ist beispielsweise in der US 5866911 beschrieben. Für die Entvölkerungsprozesse sind verschiedene Ansätze bekannt, beispielsweise wie in der DE 4416558 C2, US 6633432 oder DE 10325460 A1 beschrieben.

Ein weiteres hochauflösendes Mikroskopieverfahren wird in US 5867604 angesprochen, in der ein Objekt mit einer periodischen Struktur abgetastet wird.

Ein weiteres ähnliches Verfahren zur Auflösungssteigerung wird in der EP 1157297 B1, in Heintzmann R. et al., "Breaking the resolution limit in light microscopy", Briefings in functional genomics and proteomics, Henry Stewart, London, GB, Bd. 5, Nr. 4, 1. Januar 2006, oder in R. Heintzmann, et al., "Saturated patterned excitation microscopy - A concept for optical resolution improvement", J. Opt. Soc. AM. A, Bd. 19, Nr. 8, 20. Februar 2011, angesprochen. Dort sollen mittels strukturierter Beleuchtung nichtlineare Prozesse ausgenützt werden. Als Nichtlinearität erwähnt die Druckschrift dabei die Sättigung der Fluoreszenz. Das geschilderte Verfahren nimmt in Anspruch, durch eine strukturierte Beleuchtung eine Verschiebung des Objektraumspektrums relativ zur Übertragungsfunktion des optischen Systems zu realisieren. Konkret bedeutet die Verschiebung des Spektrums, dass Objektraumfrequenzen V0 bei einer Raumfrequenz V0 - Vm, wobei Vm die Frequenz der strukturierten Beleuchtung ist, übertragen werden. Bei gegebener, durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild. Auch ist bei diesem Verfahren als nachteilig anzusehen, dass die Probe in Bereichen außerhalb des detektierten Fokus unnötig mit Strahlung belastet wird, da die notwendige strukturierte Beleuchtung das gesamte Probenvolumen durchsetzt. Im Übrigen kann dieses Verfahren derzeit bei dicken Proben nicht verwendet werden, da außerfokal angeregte Fluoreszenz als Untergrundsignal mit auf den Detektor gelangt und somit den Dynamikbereich der nachgewiesenen Strahlung drastisch reduziert. Ein Mikroskop zur Ausführung dieses Prinzips ist in US 2009/0147354 A1 beschrieben.

Ein Verfahren, das unabhängig von der Laserscanningmikroskopie eine Auflösung jenseits der Beugungsgrenze erreicht, ist aus der WO 2006127692 und der DE 102006021317 bekannt. Dieses mit PALM abgekürzte Verfahren (Photo Activated Light Microscopy) verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden. Nicht aktivierte Moleküle der Markierungssubstanz senden auch nach Einstrahlung von Anregungsstrahlung keine oder zumindest keine merkliche Fluoreszenzstrahlung ab. Die Aktivierungsstrahlung schaltet die Markierungssubstanz also in einen Zustand, in dem sie zur Fluoreszenz anregbar ist. Auch andere Aktivierungen, z.B. thermischer Art, sind möglich. Man spricht deshalb allgemein von einem Umschaltsignal. Im PALM-Verfahren wird nun das Umschaltsignal so aufgebracht, dass zumindest ein gewisser Anteil der aktivierten Markierungsmoleküle von benachbarten aktivierten Molekülen so beabstandet sind, dass sie gemessen an der optischen Auflösung der Mikroskopie getrennt oder nachträglich trennbar sind. Die aktivierten Moleküle werden also zumindest weitgehend isoliert. Nach Aufnahme der Lumineszenzstrahlung wird für diese isolierten Moleküle dann das Zentrum deren auflösungsbegrenzt bedingten Strahlungsverteilung ermittelt und daraus rechnerisch die Lage der Moleküle mit höherer Genauigkeit bestimmt, als es die optische Abbildung eigentlich zulässt. Diese gesteigerte Auflösung durch rechnerische Schwerpunktbestimmung der Beugungsverteilung wird in der englischen Fachliteratur auch als "superresolution" bezeichnet. Sie erfordert, dass in der Probe zumindest einige der aktivierten Markierungsmoleküle mit der optischen Auflösung mit der die Lumineszenzstrahlung detektiert wird, unterscheidbar, also isoliert sind. Dann kann für solche Moleküle die Ortsangabe mit gesteigerter Auflösung erreicht werden.

Zum Isolieren einzelner Markierungsmoleküle nutzt das PALM-Verfahren die Tatsache, dass die Wahrscheinlichkeit, mit der ein Markierungsmolekül nach Empfang des Umschaltsignals gegebener Intensität, z.B. eines Photons der Aktivierungsstrahlung aktiviert wird, für alle Moleküle gleich ist. Über die Intensität des Umschaltsignals und damit die Zahl der Photonen, die auf eine Flächeneinheit der Probe fällt, kann also dafür gesorgt werden, dass die Wahrscheinlichkeit, in einem gegebenen Flächenbereich der Probe vorhandene Markierungsmoleküle zu aktivieren, so gering ist, dass es ausreichend Bereiche gibt, in denen innerhalb der optischen Auflösung nur unterscheidbare Markierungsmoleküle Fluoreszenzstrahlung emittieren. Durch passende Wahl der Intensität, z.B. der Photonendichte, des Umschaltsignals, wird erreicht, dass möglichst nur bezogen auf die optische Auflösung isoliert liegende Markierungsmoleküle aktiviert werden und nachfolgend Fluoreszenzstrahlung aussenden. Für diese isolierten Moleküle wird dann rechnerisch der Schwerpunkt der beugungsbedingten Intensitätsverteilung und damit die Lage des Markierungsmoleküls mit gesteigerter Auflösung ermittelt. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und innerhalb des Auflösung der Abbildung isoliert waren.

Das PALM-Verfahren hat dabei den Vorteil, dass weder für die Aktivierung, noch die für Anregung eine hohe Ortsauflösung benötigt wird. Stattdessen kann sowohl die Aktivierung als auch die Anregung in Weitfeldbeleuchtung erfolgen.

Im Ergebnis werden die Markierungsmoleküle durch geeignete Wahl der Intensität der Aktivierungsstrahlung statistisch in Teilmengen aktiviert. Deshalb muß für die Generierung eines Gesamtbildes einer Probe, in dem die Positionen aller Markierungsmoleküle rechnerisch mit z.B. jenseits der Beugungsgrenze liegender Auflösung bestimmt werden können, eine Vielzahl von Einzelbildern ausgewertet werden. Es können bis zu 10.000 Einzelbilder sein. Dies hat zur Folge, dass große Datenmengen verarbeitet werden, und die Messung entsprechend lange dauert. Schon die Aufnahme eines Gesamtbildes erfordert mehrere Minuten, was im Wesentlichen durch die Ausleserate der verwendeten Kamera festgelegt ist. Die Positionsbestimmung der Moleküle in den Einzelbildern erfolgt durch aufwendige rechnerische Prozeduren, wie sie beispielsweise in Egner et al., Biophysical Journal, S. 3285-3290, Band 93, November 2007, beschrieben ist. Die Bearbeitung aller Einzelbilder und das Zusammensetzen zu einem hochaufgelösten Gesamtbild, also ein Bild, in dem die Orte der Markierungsmoleküle mit einer jenseits der Beugungsgrenze liegenden Auflösung angegeben sind, dauert typischerweise 1-2 Stunden.

Weitere Artikel zu hochaufgelösten Verfahren sind Hell, S. W. (2007), "Far-Field Optical Nanoscopy". Science 316, 1153 - 1158, und zur SAX (Saturated exitation) Microscopy Fujita et al., Phys. Rev. Lett. (2007), und Yamanaka et al., J. Biomed. Opt. (2008).

Die hochauflösenden Verfahren nach dem Stand der Technik weisen verschiedene Nachteile auf: Für das STED-Verfahren ist es die Verfügbarkeit von Farbstoffen und die erforderliche hohe Laserintensität. Bei RESOLFT/GSD ist eine hohe Zahl von Schaltzyklen erforderlich. PAL-M/STORM hat eine langsame Bilderzeugungsgeschwindigkeit. Bei SAX werden die Farbstoffe stark ausgebleicht.

Die US 2009/219607 A1 beschreibt ein Mikroskop, bei dem mittels interferierender Stehwellen eine beugungsbegrenzte Beleuchtungsverteilung in der Probe erzeugt wird. Den gleichen Ansatz verfolgt auch die WO 2007/109861 A1.

Die US 2009/0161208 A1 beschreibt ein Mikroskop, das mittels verschieden orientierter Gitterstrukturen eine Hochauflösung erreicht.

Die Erfindung realisiert ein Verfahren und eine Vorrichtung zur Erzielung einer mikroskopischen Auflösung besser als der Beugungsgrenze des Mikroskops gemäß den unabhängigen Ansprüchen. Bevorzugte Weiterbildungen sind Gegenstand der abhängigen Ansprüche.

Die Erfindung beschreibt eine Methode, hochauflösende Bilder zu erzeugen auch für komplexere Proben als einer aus Einzelmolekülen bestehenden Probe. Hierbei wird erfindungsgemäß die räumliche Veränderung von Grauverteilungen ausgenutzt.

Das Verfahren besteht aus folgenden wesentlichen Schritten:

a. Mit einer Genauigkeit, die über der erreichbaren optischen Auflösung liegt, wird die Beleuchtung (ein Beleuchtungsmuster) zur Detektion verschoben.

b. Während der Verschiebung werden mehrere Bilder mit der höchsten erreichbaren optischen Auflösung aufgenommen, die jeweils einer bestimmten Verschiebelage des Beleuchtungsmusters entsprechen.

c. Aus den detektierten Signalen, beispielsweise aus einem Fluoreszenzsignal, der einzelnen Aufnahmen wird ein hochauflösendes Bild berechnet.

d. Durch Verwendung nichtlinearer Anregung und der entsprechenden Fluoreszenzmarker kann die Auflösung weiter verbessert werden.

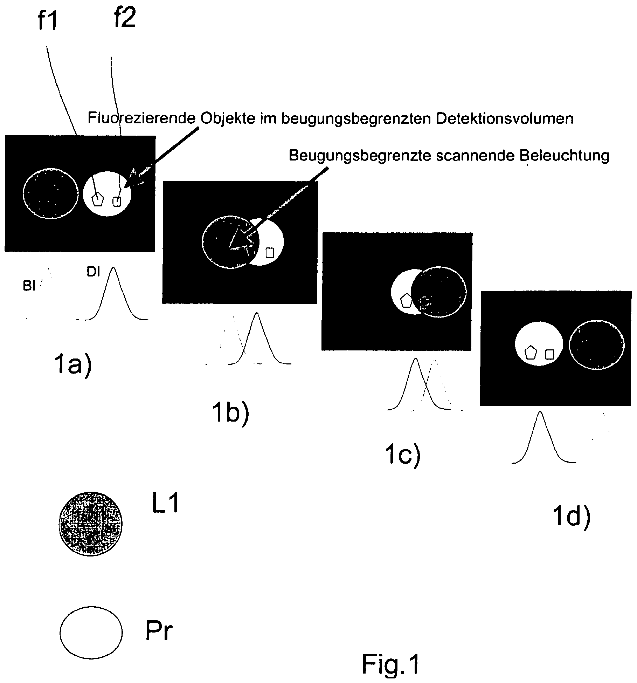

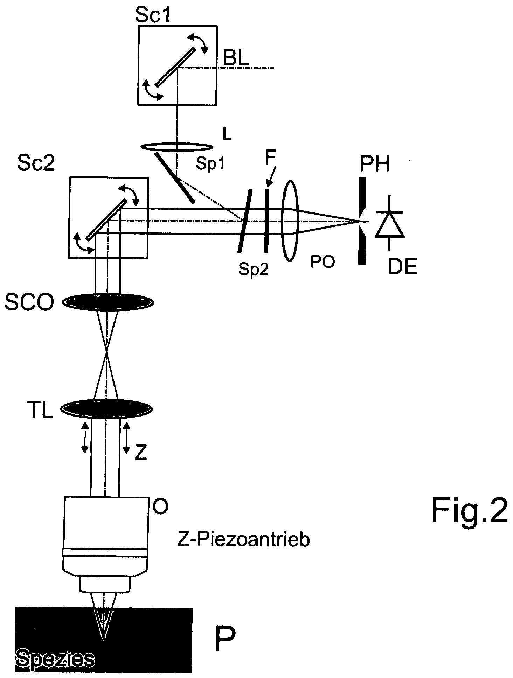

Der Kerngedanke der Erfindung ist anhand eines Beleuchtungsspots eines Laser-Scanning-Mikroskops in Fig. 1a - d) dargestellt. Zu sehen ist, wie das Scanfeld eines Laser-Scanning-Mikroskops (LSM), siehe auch Fig. 2, durch Verschiebung mit geeigneten Mitteln (Tischverschiebung, zweiter Scanner) über die Probe bewegt wird. L1 ist der Lichtspot des LSM, der in einem definierten Scanraster über die Probe bewegt wird. Dabei werden den einzelnen Stellungen beispielsweise eines Punktlichtstrahls jeweils Detektionswerte zugeordnet, um ein Bild der Probe zu erzeugen. Wegen der Beugungsbegrenzung der optischen Abbildung weisen die einzelnen Scanpunkte einen Mindestabstand auf (beispielsweise 20 nm).

Es sind beispielhaft zwei fluoreszierende Objekte f1, f2 in einem beispielhaften Probenbereich Pr in der Probe dargestellt. In Fig. 1a erfolgt keine Detektion von f1, f2 weil sich der gescannte Bereich von L außerhalb des Probenbereichs Pr befindet in dem f1, f2 angeordnet sind. In Fig. 1b ist durch Verschiebung des Scanfeldes (des Beleuchtungsrasters das durch das LSM erzeugt wird) gegen die um einen Betrag unterhalb der Auflösungsgrenze, beispielsweise 10-20 nm das Objekt f1 im Detektionsbereiches des Laserspots L und liefert ein Detektionssignal. In Fig. 1c stammt durch die weitere Verschiebung von L1 das Detektionssignal von f2. In Fig. 1d werden die Objekte f1, f2 wiederum nicht von L erfasst. In Fig. 1 sind auch die Verteilungen der jeweiligen Beleuchtungsintensität Bi und Detektionsintensität Di dargestellt.

Auf das Berechnungsverfahren zur Trennung/Rekonstruktion des Signals der einzelnen Objekte durch Entfaltung der Signale wird weiter unten eingegangen.

Da der Beleuchtungsspot beispielsweise in einem LSM mit größerer Genauigkeit eingestellt werden kann als die beugungsbegrenzte Auflösung des Mikroskops, kann durch Verschiebung des Beleuchtungsrasters relativ zur Detektion die Auflösung erhöht werden.

In Fig. 2 ist eine mögliche Ausführungsform der Erfindung dargestellt. Sie besteht aus einem Laser-Scanning-Mikroskop, dessen Grundprinzip verschiedentlich, beispielsweise in DE 19702753, ausführlich beschrieben ist. In diesem Fall wird jedoch gemäß der vorliegenden Erfindung das Beleuchtungslicht BL über einen ersten Scanner SC1, Linse L und Umlenkspiegel SP1 und einen teildurchlässigen Spiegel SP2 in Richtung eines zweiten Scanners SC2 (des X/Y Scanners des LSM) geleitet und von diesem über eine Scanoptik SCO, Tubuslinse TL und Objektiv O auf eine Probe P fokussiert. Das Probenlicht gelangt auf dem Rückweg über SC2, SP2, Filter F und eine Pinholeoptik PO und ein Pinhole PH auf einen Detektor DE zur konfokalen Detektion. Vorteilhaft wird ein schneller Scanner SC2 (LSM) mit einem langsamen Scanner SC1 kombiniert. Der Scanner SC1 verschiebt das Beleuchtungsraster des LSDM gegen die Detektion wie anhand von Fig. 1 bereits dargestellt. Bei jedem Schritt des Scanners SC1 erfolgt eine Abrasterung der Probe mit SC2. Hierdurch wird eine gaußförmige Beleuchtungsfunktion (Fig.1) langsam über die Probe - relativ zur Detektion - verschoben. Die Verschiebung und jeweilige Bildaufnahme erfolg beispielsweise in 10 nm Schritten. Die Zahl der Einzelpositionen richtet sich nach der zu erreichenden Auflösung.

Statt des Scanners SC1 zur Verschiebung des Scanfeldes könnte auch die Probe mit einem hochgenauen Probentisch langsam verschoben werden.

Besonders vorteilhaft ist ebenfalls die Verwendung von mehreren konfokalen Detektoren gleichzeitig, wobei einer immer mit der Anregung läuft (standard confocal) und weitere Detektoren unabhängig davon konfokal in die Probe schauen. Der Vorteil besteht zum einen in der Nutzung allen Fluoreszenzlichtes, zum anderen in der Verbesserung des SNR was ebenfalls mit in die Auswertung einfließen kann, da für die selbe Beleuchtung mehrere Messpunkte detektiert werden.

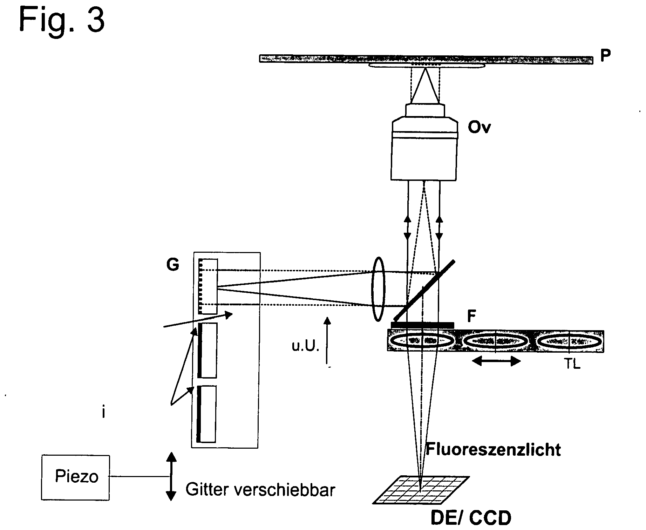

In Fig. 3 ist eine Weitfeldausführung der Erfindung mit einem Gitter zur Beleuchtungsmodulierung dargestellt. Statt eines Gitters kann eine analog optisch Wirkendes Lichtmuster oder Interferenzmuster eingesetzt werden. Die Probe P wird über ein Liniengitter G und das Objektiv O im Weitfeld (mit einer nicht dargestellten Lichtquelle) beleuchtet. Zur Trennung von Beleuchtungs- und Detektionslicht ist ein Strahlteiler ST vorgesehen. Das Probenlicht wird über Filter F, auswechselbare Tubuslinsen TL über einen CCD Empfänger DE ortsauflösend detektiert. Über das Liniengitter G werden Beleuchtungslinien auf der Probe erzeugt.

Durch Verschieben des Gitters zur Probe wird quasi ein stehendes Scanfeld, repräsentiert durch die Beleuchtungslinien, hochgenau, beispielsweise mittels eines das Gitter verschiebenden Piezoantriebes PZ, verschoben Die Größenordnung der Verschiebung liegt hierbei unterhalb des Abstandes der einzelnen Beleuchtungslinien auf der Probe.

Die modulierte Beleuchtungsstrahlung, die durch die bekannte Gittermodulation festgelegt wird, wird durch die Gitterverschiebung in zu Fig. 1 analoge Beziehung zur Detektionsmodulation gebracht und ein hochauflösendes Bild kann errechnet werden.

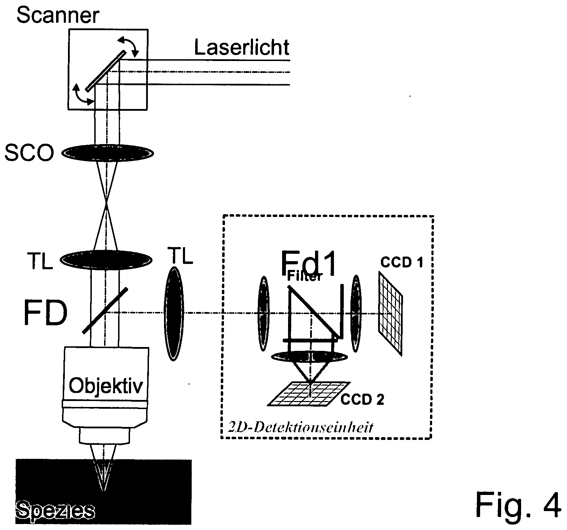

Fig. 4 zeigt eine nicht-descannte Ausblendung der Detektion bei der Laserlicht scannend über die Probe bewegt wird, über einen dichroitischen Spiegel Fd in Richtung einer Detektoranordnung, hier vorzugsweise mit zwei Detektoren CCD1 und CCD2 in Transmission und Reflektion eines dichroitischen Spiegels Fd1 die beispielsweise unterschiedliche Wellenlängen detektieren können.

Es ist auch vorteilhaft eine Anordnung von CCD1 und CCD2 in unterschiedlichen Z-Ebenen zur Erhöhung der z-Auflösung (Richtung der optischen Achse) denkbar.

Durch Verschiebung des Scanfeldes und der entsprechenden Signale auf den Detektoren CCD1 und CCD2 um geringe Beträge, wie schon oben erwähnt, kann die Auflösung erfindungsgemäß erhöht werden.

Die Verschiebung kann durch geringfügige Verschiebung der Detektion beispielsweise entlang einer X Richtung senkrecht zur optischen Achse, z, erfolgen, aber auch beispielhaft durch Verschiebung der Probe oder durch einen zweiten Scanner wie anhand von Fig. 2 beschrieben.

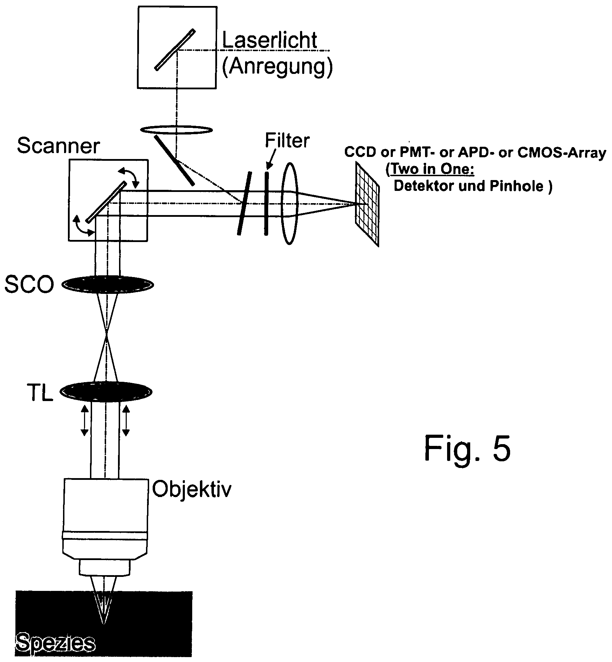

Fig. 5 zeigt eine zu Fig. 2 ähnliche Anordnung bei der eine descannte Abbildung auf einen Flächendetektor wie einen CCD-Empfänger oder ein PMT- oder APD- oder CMOS-Array erfolgt. Das Pinhole des Scanningmikroskops kann hier durch Auslesen nur bestimmter Detektorpixel ersetzt werden. Jede Detektoruntereinheit detektiert quasi konfokal.

Die in obigen anderen Ausführungen erforderliche Verschiebung zur Detektion wird hier durch eine "Verschiebung" im Sinne des Wechsels zwischen vorzugsweise benachbarten Detektorelementen (Pixeln) simuliert.

Dabei können durch geeignete Schaltung der Detektorpixel Verschiebungen bezüglich der Detektion eingestellt werden, die den in den oben geschilderten Ausführungen entsprechen, ohne dass eine direkte mechanische Bewegung erzeugt werden muss. Durch Pixelversatz entsteht vorteilhaft die Wirkung einer Verschiebung eines Detektionsfeldes zu einem Beleuchtungsfeld.

Dies ist sinngemäß auch bei einer non-descannten Detektion wie in Fig.4 möglich, beispielsweise vorteilhaft anstelle einer weiteren Bewegung, beispielsweise der Probe.

Vorraussetzung zur Auflösungserhöhung ist natürlich (unter Berücksichtigung des Abbildungsmaßstabes der Abbildungsoptik des Mikroskopes) dass die effektive Pixelgröße am Ort des Detektors nur ein Bruchteil der Halbwertsbreite der PSF beträgt, beispielsweise ein Viertel.

Die oben anhand von Fig. 5 beschriebene Ausführung 5 hat zusammengefasst folgende wesentliche Vorteile:

1. Da der beugungsbegrenzte Punkt "Modulation/Strukturierung" lateral in alle Raumrichtungen aufweist kann man den Scanmodus des LSM beibehalten (in x- und y-Richtung) und dennoch annähernd isotrope Auflösungssteigerung erreichen. Beim Scannen der Beleuchtung nimmt durch die Punktförmige Strukturierung die Beleuchtung in allen Raumrichtungen zu und wieder ab. Dies ist vorteilhaft wenn das Verfahren mit strukturierter Beleuchtung verglichen wird, bei der mindestens 3 Raumrichtungen erforderlich sind. Damit ergibt sich auch ein Geschwindigkeitsvorteil für andere Anordnungen die den Punktscanner verwenden.

2. Der jeweilige beugungsbegrenzte Punkt beinhaltet schon die höchste mögliche Raumfrequenz und stärkst mögliche Modulation.

3. Der Array-Detektor ist so angeordnet, dass jede Detektoruntereinheit (Pixel) konfokal detektiert. Damit ergibt sich neben der konfokalen Hintergrundunterdrückung eine laterale Auflösungssteigerung, die über das konfokale LSM hinausgeht.

4. Der Arraydetektor parallelisiert das sonst nötige zusätzliche Scannen der Anregung über den Detektionsspot.

**Erhöhung der vertikalen (Z)-Auflösung:**

Eine erfindungsgemäße Hochauflösung kann in analoger Weise auch in vertikaler (z) Richtung erzielt werden, indem bei der Abtastung der Probe in bekannter Weise in Z-Stapeln durch eine zusätzliche Verschiebung in Z-Richtung ein Abstand zwischen der Fokalebene und der Beleuchtungsebene geschaffen und jeweils detektiert wird.

Beispielsweise kann in Fig. 2 in Z-Richtung verschiebbare Linse, dargestellt anhand der Tubuslinse TL schematisch mit Pfeilen in z-Richtung, vorgesehen sein, um den Fokus, der, beispielsweise durch ein Piezoobjektiv in Z-Richtung verstellt wird, um Z-Stapel aufzunehmen, in Zwischenstellungen zwischen den einzelnen Z-Stellungen bei der Bildaufnahme zu bringen.

Bei einem Linienscanner kann analog zu Fig. 2 und 3 durch Verschiebung der Probe oder des Scanfeldes ebenfalls eine Implementierung der Erfindung erfolgen. Besondere Vorteile bietet der Linienscanner durch die deutlich schnellere Bildaufnahme bei Erhaltung der Konfokalität.

Weitere Anwendungen um Muster schnell über die Probe zu bewegen, wobei jeweils eine Bewegung des abgerasterten Detektionsbildes über die Probe gemäß der Erfindung erfolgt, sind im Rahmen der Erfindung enthalten, wie die Verwendung von Spatial Light Modulators/DMDs in der Beleuchtung.

Die Verallgemeinerung des Prinzips führt zu der folgenden Methode für die Rekonstruktion von Probeninformationen die eine Ausdehnung kleiner als die Beugungsgrenze haben.

Grundbetrachtungen :

Die Intensität an jedem Bildpunkt kann in der folgenden Form angegeben werden:

$$D(x_0) \propto \int_{-\infty}^{\infty} H(x - x_0) \cdot I(x) \cdot c(x) dx$$

Dabei handelt es sich bei $c(x)$ um die Konzentration der Fluorophore, $H$ ist die "Point-Spread-Funktion" der Detektion, $I(x)$ ist die Beleuchtungsintensität am Ort x, die für den Fall eines "Scanning"-Mikroskops die "Point-Spread-Funktion" der Beleuchtung darstellt.

Für den Fall eines pixelierten Kamera-Detektors geht das Integral in eine Riemann-Summe über.

Wird nun der Anregungs-Spot oder das Anregungs-Muster mit hoher Genauigkeit entlang der x-Richtung über die Probe bewegt, so erhält man folgendes Gleichungssystem:

$$D_{1,j} = \sum_j I_{1,j} \bullet c_j \bullet H_{1,j}$$

$$D_{2,j} = \sum_j I_{2,j} \bullet c_j \bullet H_{2,j}$$

$$\vdots$$

$$D_{n,j} = \sum_j I_{n,j} \bullet c_j \bullet H_{n,j}$$

mit n als Index für die verschiedenen Beleuchtungseinstellungen und j als Index für den Detektor(Kamera)pixel.

Da das Beleuchtungsmuster $I$ als auch die "Point-Spread-Funktion" $H$ i.a. gut bekannt sind, ist die Lösung des hochgradig überbestimmten Gleichungssystems z.B. durch Pseudo-Matrix-Inversion ("Penrose Moore Inverse") - analog zum "Zeiss-Unmixing"-Algorithmus - relativ einfach möglich.

Das Signal-Rausch-Verhältnis der überabgetasteten Region limitiert die mögliche Auflösung. Das "Laser-Scanning"-Mikroskop ist in dieser Hinsicht ideal, da die Spots intrinsisch das Beugungslimit erreichen. Die Zahl der notwendigen Iterationen wird klein sein. Zusätzlich kann die Anzahl an Iterationen gegenüber der Modulationstiefe mit dem Signal/Rausch-Verhältnis für jede Messung optimiert werden, um eine bestmögliche Auflösungssteigerung zu erhalten.

Es ist zu bemerken, dass die Auflösungssteigerung sich nur in "Scan"-Richtung ergibt. Analog zur strukturierten Beleuchtungsmethode ermöglicht das Scannen der Probe in mindestens drei Richtungen, Bildinformationen in höherer Auflösung aus den Messdaten rekonstruieren zu können.

**Mathematischer Formalismus:**

Das eindimensionale Bild ist durch das folgende Integral gegeben:

$$D(x,p) = \int_{x'} O(x')E(x'-p)H(x-x')dx'$$

wobei $O(x)$ das Objekt repräsentiert, $E(x)$ ist das Anregungsprofil ($p$ ist die Phase, oder der Offset des Anregungsprofils in verschiedenen "Scans"), und $H(x)$ ist die "Point Spread Function" (PSF) der Detektion.

**Darstellung des Messsignals im Fourierraum:**

$D(x,p)$ kann hinsichtlich der $x$-Koordinate oder hinsichtlich der $p$-Koordinate fouriertransformiert werden.

**Strukturierte Beleuchtung:**

Wenn $D(x,p)$ hinsichtlich $x$ fouriertransformiert wird, dann erhält man:

$$D^f(\omega,p) = FT_{x'}\{O(x')E(x'-p)\}H^f(\omega)$$

Ein Produkt A im Ortsraum wird zu einer Faltung im Fourierraum:

$$D^f(\omega,p) = \left\{\int_\omega O^f(\omega')E^f(\omega-\omega',p)d\omega'\right\}H^f(\omega)$$

oder

$$D^f(\omega,p) = \left\{O^f(\omega)\otimes E^f(\omega,p)\right\}H^f(\omega)$$

Die diskrete Darstellung von $E^f(\omega,p)$ sieht im Fourierraum folgendermaßen aus:

$$E^f(\omega,p) = \sum_n e_n(p)\delta(\omega-\omega_n)$$

Damit erhalten wir schlussendlich:

$$D^f(\omega,p) = \sum_n e_n(p)O^f(\omega-\omega_n)H^f(\omega) \qquad (1)$$

Wenn das Anregungsprofil einen einfach-expontiellen Verlauf hat, gilt:

$$E^f(\omega,p) = A\delta(\omega) + B(\omega_g p)\delta(\omega+\omega_g) + B(-\omega_g p)\delta(\omega-\omega_g)$$

und dann wird aus Gleichung (1)

$$D^f(\omega,p) = \left\{AO^f(\omega) + B(-\omega_g p)O^f(\omega-\omega_g) + B(\omega_g p)O^f(\omega+\omega_g)\right\}H^f(\omega) \qquad (2)$$

Gleichung (2) verkörpert mathematisch das klassische Konzept zur strukturierten Beleuchtung, wo $E^f(\omega,p)$ die

Detektionsbänder definiert und die Detektion OTF $H^f(\omega)$ die Gewichtung der Bänder festlegt.

**Scannende Beleuchtung:**

Wenn $D(x,p)$ hinsichtlich $p$ fouriertransformiert wird, dann folgt:

$$D^f(x,\omega) = FT_{x'}\{O(x')H(x-x')\}E^f(\omega)$$

Ein Produkt A im Ortsraum wird zu einer Faltung im Fourierraum:

$$D^f(x,\omega) = \left\{\int_\omega O^f(\omega')H^f(x,\omega-\omega')d\omega'\right\}E^f(\omega)$$

oder

$$D^f(x,\omega) = \{O^f(\omega)\otimes H^f(x,\omega)\}E^f(\omega)$$

$H^f(x,\omega)$ kann im Fourierraum als diskrete Reihe von Frequenzkomponenten dargestellt werden:

$$H^f(x,\omega) = \sum_n h_n(x)\delta(\omega-\omega_n)$$

Die Formel des detektierten Bildes lautet dann:

$$D^f(x,\omega) = \sum_n h_n(x)O^f(\omega-\omega_n)E^f(\omega) \qquad (3)$$

Im Vergleich zu Gleichung (1) sind Anregung und Detektion in Gleichung (3) ausgetauscht.
Für einfach exponentielle Anregung

$$E^f(\omega) = A\delta(\omega) + B\delta(\omega+\omega_g) + B\delta(\omega-\omega_g)$$

tragen 3 Frequenzen zum Signal bei. Da jedoch die Detektions-OTF $H^f(x,\omega)$ aus einem (quasi) kontinuierlichen Spektrum von Frequenzen besteht, tragen alle Frequenzen zum Signal bei, die sich aus der Summe von $\omega_g$ und der höchsten sich vom Rauschen unterscheidenden Frequenzkomponente in $H^f(x,\omega)$ ergeben.

**Ortsraum (Kamera):**

Das an einem CCD-Pixel detektierte Signal lautet:

$$D(x_k,p) = \int_{x_k-\Delta x}^{x_k+\Delta x} D(x,p)dx = \int_{x'} O(x')E(x'-p)dx' \int_{x_k-\Delta x}^{x_k+\Delta x} H(x-x')dx = \int_{x'} O(x')E(x'-p)\hat{H}(x_k,x')dx'$$

Wir betrachten zwei Pixel detektiert am Ort $x_k$ and $x_k + \Delta x$:

$$D(x_k,p) = \int_{x'} O(x')E(x'-p)\hat{H}(x_k,x')dx'$$

$$D(x_k + \Delta x, p) = \int_{x'} O(x')E(x' - p)\hat{H}(x_k + \Delta x, x')dx'$$

Als zu rekonstruierendes Objekt O($x$), betrachten wir einen Satz von möglichst gleichverteilten Punkten $h_i$, $i = 1,...,m$:

$$O(x) = \sum_{i=1}^{m} a_i \delta(x - h_i) \qquad\qquad (4)$$

wobei O($x$) die Dirac-Delta-Funktion ist, $a_i$ sind die zu rekonstruierenden Bildsignale. In dem gegebenen Modell kann das "over-sampling" mit $m/2$ quantifiziert werden. Mit (4) nehmen die detektierten Pixel $D(x_k,p)$ and $D(x_k+\Delta x,p)$ die folgende Form an

$$D(x_k, p) = \sum_{i=1}^{m} a_i E(h_i - p)\hat{H}(x_k, h_i)$$

$$D(x_k + \Delta x, p) = \sum_{i=1}^{m} a_i E(h_i - p)\hat{H}(x_k + \Delta x, h_i)$$

Wenn außerdem das Anregungsprofil ein Kosinus und die PSF H($x$) ein Gaussprofil ist, dann erhalten wir:

$$D(x_k, p) = \sum_{i=1}^{m} a_i \cos\{\omega(h_i - p)\}\hat{H}(x_k, h_i)$$

$$D(x_k + \Delta x, p) = \sum_{i=1}^{m} a_i \cos\{\omega(h_i - p)\}\hat{H}(x_k + \Delta x, h_i) \qquad\qquad (5)$$

mit

$$\hat{H}(x_k, x') = \int_{x_k-\Delta x}^{x_k+\Delta x} H(x - x')dx = \int_{x_k-\Delta x}^{x_k+\Delta x} \exp\{-(x - x')^2/(2\sigma^2)\}dx$$

Die Standardabweichung $\sigma$ kann näherungsweise beschrieben werden mit $\sigma = 0.21\lambda/NA$, wo $\lambda$ die Emissionswellenlänge und $NA$ die numerische Apertur ist.

Die zwei Sätze von linear algebraischen Gleichungen (5) können hinsichtlich der unbekannten $a_0$ und $a_i$ gelöst werden. Es ist zu beachten, dass die Gleichungen (5) zusätzlich durch die Phase des Anregungsprofils parametrisiert sind. Deshalb können mehr linear unabhängige Gleichungen für verschiedene $p$ erzeugt werden. Dies erhöht den Informationsgehalt des Gleichungssatzes (5), und führt schlussendlich zu einer genaueren Rekonstruktion mit besserer Auflösung.

Das Gleichungssystem kann schlussendlich in Matrixform angegeben werden:

$$\mathbf{D} = \mathbf{SA}$$

wo

$$\mathbf{D} = \left[D(x_k, p_1), D(x_k + \Delta x, p_1),..., D(x_k, p_n), D(x_k + \Delta x, p_n)\right]^T$$

$$\mathbf{S} = \begin{bmatrix} \cos\{\omega(h_i - p_1)\}\hat{H}(x_k, h_i) \\ \cos\{\omega(h_i - p_1)\}\hat{H}(x_k + \Delta x, h_i) \\ ... \\ \cos\{\omega(h_i - p_n)\}\hat{H}(x_k, h_i) \\ \cos\{\omega(h_i - p_n)\}\hat{H}(x_k + \Delta x, h_i) \end{bmatrix}_{i=1,...,m}$$

$$\mathbf{A} = \begin{bmatrix} a_i \end{bmatrix}_{i=1,...,m}^T$$

und n die Anzahl der Scans ist.

Die Elemente der Matrix D sind gemessene Werte, d.h. sie haben einen gewissen Fehler $\Delta\mathbf{D}$.

Diese Fehler übertragen sich in die Lösung **A,** so dass **A** mit einen Fehler $\Delta\mathbf{A}$ behaftet ist.

Der Fehler von **A** ist bekanntermaßen mit dem Fehler von **D** verknüpft über

$$\frac{\|\Delta\mathbf{D}\|}{\|\mathbf{D}\|} \leq \kappa(\mathbf{S})\frac{\|\Delta\mathbf{A}\|}{\|\mathbf{A}\|}$$

wo $\kappa(S) = \|S\|\|S^{-1}\|$ die Konditionierungszahl der Matrix S und $\|.\|$ die Norm der Matrix sind.

Umso größer die Konditionierungszahl ist, desto weniger resistent ist das System hinsichtlich der Fehler der Eingangsdaten.

Eine Möglichkeit zur Abschätzung der Konditionierungszahl ergibt sich durch die Verwendung der singulären Werte der Matrix **S**:

$$\kappa(\mathbf{S}) = s_{\max}(\mathbf{S})/s_{\min}(\mathbf{S})$$

wo $s_{\max}(\mathbf{S})$ und $s_{\min}(\mathbf{S})$ der maximale und minimale singuläre Wert von **S** sind.

Die Konditionierungszahl ist also ein Maß dafür, wie gut die Hochauflösungsinformation rekonstruiert werden kann. Aus der Herleitung wird klar, daß die Verbesserung der Auflösung vom Zusammenspiel zweier Faktoren abhängig ist:

1. Vom Signal-zu Rausch-Verhältnis, ähnlich wie die übliche Dekonvolution. Das heißt, die oben beschriebenen Gleichungen werden aufgrund von Rauschen u.U. als nicht mehr linear unabhängig erkannt und können somit nicht mehr zur Lösung beitragen. Die Lösung verliert Eindeutigkeit.

2. Die Steilheit der "Beleuchtungs-psf". Je größer die Modulation, desto eher erlangt man linear unabhängige Information die zur Lösung des Gleichungssystem beitragen kann.

Die Verbesserung der Auflösung sollte mindestens um den Faktor Zwei über der konfokalen Auflösung liegen, da die scannende Beleuchtung analog zur strukturierten Beleuchtung mit ihren Frequenzen die Auflösungsgrenze hinaus schiebt. Da die höchste in die Probe mit Licht durch das Objektiv abbildbare Frequenz jedoch genauso beugungslimitert ist, ergibt sich wie oben und auch bei strukturierter Beleuchtung hergeleitet der Faktor Zwei. Jedoch gilt hier, dass die konfokale Auflösung Ausgangspunkt ist, und nicht wie bei strukturierter Beleuchtung die Auflösung des Weitfeld-Mikroskops.

Erste Experimente haben eine Auflösung von <90nm gezeigt.

**Modulierte Beleuchtung:**

Das beschriebene Verfahren (Anregung über die Detektion zu Scannen) hat aufgrund des Abfalls der PSF sowohl detektions- als auch anregungsseitig den Nachteil, dass bei nur geringem Überlapp von Anregung und Detektion die gemessene Intensität klein ist und damit das Signal-zu-Rauschverhältnis ebenfalls. Modulation der Beleuchtung, wie z.B. die Erhöhung der Laserintensität über einen AOTF oder direkte Modulation des Laser und bei gepulster Beleuchtung durch Anpassung der Pulsrate oder Höhe oder Anpassung der Belichtungszeit usw., kann diesen Effekt vollständig eliminieren und das SNR für diese Datenpunkte entscheidend verbessern. Hierbei kann die Veränderung der Intensität oder Modulation in einem Regelkreis eine einstellbare Regelgröße zur Erzielung eines optimalen Detektionssignals darstellen.

Besonders attraktiv ist es, das Signal/Rauschverhältnis SNR während des gesamten Vorgangs konstant zu halten oder sogar in den Bereichen mit geringem Überlapp von Anregung und Detektion zu erhöhen, um die Entfaltung (das Lösen des oben beschriebenen Linearen Gleichungssystems) entscheidend zu verbessern und damit die Auflösung im Bild. Das Gleichungssystem für die Bildpunkte mit nur geringem Überlapp ist klein, da die meisten detektierten Punkte nicht beleuchtet sind und damit nur Null-Beiträge liefern. Je genauer man also diese Intensitäten messen kann, desto besser kann man dieses kleine Gleichungssystem mit nur wenigen Unbekannten lösen.

Allgemeiner formuliert ermöglicht die Modulation durch Verbesserung des SNR, die gemessene linear unabhängige Information wirklich zu nutzen und nicht im Rauschen zu verlieren.

Aus diesen Überlegungen ergibt sich, dass eine Kombination der Technik mit DIM (Dynamic Illumination Microscopy oder CLEM) besonders vorteilhaft ist, da hier ein voreingestelltes optimales SNR punktweise über die Regelung der Beleuchtung erreicht werden kann.

Außerdem ist eine Kombination mit folgenden nichtlinearen Verfahren denkbar und vorteilhaft:

1. STED/RESOLFT, da dort die PSF schon um einen Faktor 2-3 oder mehr steiler ist und somit die hiermit erzeugte Auflösungsteigerung noch hinzukommt.

2. Verwendung von photoaktivierbaren Farbstoffen, da sich hier die PSF der Aktivierung und der Fluoreszenzanregung multiplizieren und die effektive PSF damit steiler wird.

3. Alle Verfahren wie Saturierung des Farbstoffes etc., die auch für die nichtlineare strukturierte Beleuchtung verwendet werden können (R. Heintzmann, T.M. Jovin, und C. Cremer: Saturated patterned excitation microscopy - A concept for optical resolution improvement. J. Opt. Soc. Am. A, 19(8):1599-1609, 2002).

4. Multiphotonen-Mikroskopie (EP 500717 B2).

Mögliche vorteilhafte und überraschende Implementierungen der Erfindung sind ohne Anspruch auf Vollständigkeit:

Das Durchschieben einer Blende im Zwischenbild: Das Verfahren funktioniert auch in einfacheren Systemen, bei denen beleuchtungsseitig durch Schieben einer Blende im Zwischenbild dasselbe Verfahren angewendet werden kann. Die Kante der Beleuchtung dient hier als Beleuchtungsgewichtung und wird zur Entfaltung genutzt. Eine Weitfeldbeleuchtung mit scharfer Kante stellt im weitesten Sinne eine Strukturierung der Beleuchtung dar.

Besonders vorteilhaft ist die Anwendung des Verfahrens außerdem in Reflexion (ohne Fluoreszenz) da gewöhnlich die Signal zu Rausch-Verhältnisse in Reflexion deutlich besser sind (beispielsweise Punktscanner in der Materialmikroskopie) Spinning Disc: Die Verwendung des Verfahrens in einem spinning-disc-Aufbau ist ebenfalls vorteilhaft. Dabei wird nur durch die Disk beleuchtet und auf einer Kamera ohne pinhole detektiert. Die Konfokalität kann durch Software/Bildverarbeitung auf der Kamera erfolgen (virtual pinhole). Hier kann die Genauigkeit, mit der das Scanning zur Detektion und Probe steht, in die Fertigung der Scheibe fließen, was extrem vorteilhaft ist und Fehlerquellen für die Verrechnung vermeidet.

SPIM: Die SPIM Technologie ist beispielsweise in DE10257423A1, WO2004/0530558 beschrieben. Die Verwendung des erfindungsgemäßen Verfahrens bringt für SPIM bei Scannen des Lichtblattes einen Auflösungsgewinn in axialer Richtung. Die Auflösungssteigerung lateral kann beispielweise durch eine Strukturierung des Lichtblattes erfolgen, deren Phase scannend durch die Probe geschoben wird. Es ergeben sich alle typischen Vorteile des SPIM plus Auflösungssteigerung.

CARS, SHG, RAMAN: Da Fluoreszenz und Linearität der Anregung in keiner Weise Voraussetzung dieses Verfahrens sind, ergibt sich ebenfalls ein Vorteil für Verfahren wie CARS, Second Harmonic Generation oder stimulated RAMAN.

**Patentansprüche**

1. Reflexions- oder Fluoreszenzmikroskopieverfahren zur Steigerung der Auflösung eines Laser-Scanning-Mikroskops (LSM) bei der Detektion einer beleuchteten Probe (P), wobei

- ein Beleuchtungsmuster auf der Probe (P) erzeugt wird und
- die beleuchtete Probe durch das Mikroskop auf eine Detektoreinrichtung abgebildet wird,
- das Beleuchtungsmuster mindestens einen beugungsbegrenzten Punkt (L1) umfasst und in mehreren Schritten wiederholt relativ zur Probe (P) verschoben wird, wobei das Beleuchtungsmuster entlang einer durch einen Vektor **x** gegebenen Richtung über die Probe (P) bewegt wird,
- die Detektoreinrichtung ausgebildet ist als ein Pixel umfassender Flächendetektor (DE; CCD1, CCD2),
- unter Berücksichtigung eines Abbildungsmaßstabes des Mikroskopes eine effektive Pixelgröße des Flächendetektors (DE; CCD1, CCD2) nur einen Bruchteil einer Halbwertsbreite einer Punktbildverwaschungsfunktion der Abbildung beträgt,
- eine Schrittweite der Verschiebung kleiner als eine optische Auflösungsgrenze des Mikroskopes (LSM) ist und für jeden Schritt eine Abspeicherung von Detektionssignalen des Flächendetektors erfolgt,
**dadurch gekennzeichnet, dass**
- an jedem Bildpunkt mit dem Detektor eine Signalintensität D

$$D(x_0) \propto \int \tilde{H}(x - x_0) \cdot I(x) \cdot c(x) dx$$

erhalten wird, mit c(**x**): Konzentrationsverteilung reflektierender Strukturen oder leuchtender Fluorophore der Probe (P), H: Punktbildverwaschungsfunktion der Abbildung, I(**x**) Beleuchtungsintensitätsverteilung in Abhängigkeit von **x**, und
- mit n als Index für die verschiedenen Beleuchtungseinstellungen und j als Index für den Detektorpixel jeweils die Intensität bestimmt wird, wodurch ein Gleichungssystem

$$D_{1,j} = \sum_j I_{1,j} \cdot c_j \cdot H_{1,j}$$

$$D_{2,j} = \sum_j I_{2,j} \cdot c_j \cdot H_{2,j}$$

$$\vdots$$

$$D_{n,j} = \sum_j I_{n,j} \cdot c_j \cdot H_{n,j}$$

resultiert und dieses zumindest näherungsweise nach c gelöst wird.

2. Verfahren nach Anspruch 1, wobei die Schrittweite unter der Hälfte der Auflösungsgrenze liegt.

3. Verfahren nach einem der vorangehenden Ansprüche, wobei die Relativverschiebung zur horizontalen Auflösungserhöhung senkrecht zur optischen Achse des Mikroskopes (LS) oder zur vertikalen Auflösungserhöhung in Richtung der optischen Achse erfolgt.

4. Verfahren nach mindestens einem der vorangehenden Ansprüche, wobei zur Erzeugung des Beleuchtungsmusters eine eine Kante aufweisenden Blende in einer Zwischenbildebene des Mikroskops verschoben wird.

5. Verfahren nach einem der vorangehenden Ansprüche, wobei das Beleuchtungsmuster die Probe (P) abrastert.

6. Verfahren nach einem der vorangehenden Ansprüche, wobei eine Weitfeldbeleuchtung der Probe (P) erfolgt und das Beleuchtungsmuster durch eine Projektion einer Lichtverteilung oder Projektion einer Lochscheibe entsteht.

7. Verfahren nach einem der vorangehenden Ansprüche, wobei die Relativverschiebung erzeugt wird durch

- Verschiebung der Probe (P) oder
- Verschiebung eines Scanfeldes oder
- Verschiebung von ausgelesenen Pixeln des Detektors (DE) oder Verschiebung des Beleuchtungsmusters.

8. Mikroskop zur Ausführung eines Verfahrens nach einem der vorangehenden Ansprüche, umfassend:

- Mittel zur Erzeugung eines Beleuchtungsmusters auf der Probe (P),
- eine Detektionseinheit zur Detektion von Probenlicht und Speichermittel zur Abspeicherung von Detektionssignalen und
- Mittel zur Relativverschiebung zwischen der Probe (P) und dem Beleuchtungsmuster von einer ersten in mindestens eine zweite Position des Beleuchtungsmusters auf der Probe (P),
- wobei die Mittel zur Erzeugung eines Beleuchtungsmusters ausgebildet sind, ein Beleuchtungsmuster zu erzeugen, das mindestens einen beugungsbegrenzten Punkt (L1) auf die Probe (P) umfasst,
- wobei die Detektionseinheit einen Flächendetektor (DE; CCD1, CCD2) aufweist,
- wobei die Detektions- und Speichermittel zur Detektion und Abspeicherung der Detektionssignale sowohl in der ersten als auch in der mindestens einen zweiten Position ausgebildet sind,
- unter Berücksichtigung eines Abbildungsmaßstabes des Mikroskopes (LSM) eine effektive Pixelgröße des Flächendetektors (DE; CCD1, CCD2) nur einen Bruchteil einer Halbwertsbreite einer Punktbildverwaschungsfunktion der Abbildung beträgt, und
- die Relativverschiebung kleiner ist als die Auflösungsgrenze des Mikroskops (LSM) **dadurch gekennzeichnet, dass**
- Mittel zur Verrechnung der abgespeicherten Detektionssignale und Erzeugung eines hochaufgelösten Bildes vorgesehen sind, die an jedem Bildpunkt mit dem Detektor eine Signalintensität D

$$D(x_0) \propto \int H(x - x_0) \cdot I(x) \cdot c(x) dx$$

erhalten, mit $c(\mathbf{x})$: Konzentrationsverteilung reflektierender Strukturen oder leuchtender Fluorophore der Probe (P), $H$: Punktbildverwaschungsfunktion der Abbildung, $I(\mathbf{x})$ Beleuchtungsintensitätsverteilung in Abhängigkeit von $\mathbf{x}$, und mit n als Index für die verschiedenen Beleuchtungseinstellungen und j als Index für den Detektorpixel jeweils die Intensität bestimmen, ein Gleichungssystem

$$D_{1,j} = \sum_j I_{1,j} \cdot c_j \cdot H_{1,j}$$
$$D_{2,j} = \sum_j I_{2,j} \cdot c_j \cdot H_{2,j}$$
$$D_{n,j} = \sum_j I_{n,j} \cdot c_j \cdot H_{n,j}$$

aufstellen, und dieses zumindest näherungsweise nach c lösen.

**9.** Mikroskop nach Anspruch 8, wobei das Mikroskop ein Laser-Scanning-Mikroskop mit rasternder Beleuchtung ist.

**10.** Mikroskop nach mindestens einem der Ansprüche 8-9, wobei das Mikroskop ein Weitfeldmikroskop mit strukturierter Beleuchtung ist, vorzugsweise über eine projizierte Intensitätsverteilung oder eine Nipkowscheibe.

**11.** Mikroskop nach mindestens einem der Ansprüche 8-10, wobei die Mittel zur Erzeugung der Relativverschiebung, Mittel zur Verschiebung der Probe oder Mittel zur Verschiebung eines Scanfeldes oder Mittel zur Erzeugung einer Verschiebung ausgelesener Detektorelemente oder Mittel zur Verschiebung des Beleuchtungsmusters sind.

**Claims**

**1.** Reflection or fluorescence microscopy method for increasing the resolution of a laser scanning microscope (LSM) when detecting an illuminated sample (P), wherein

- an illumination pattern is produced on the sample (P) and
- the illuminated sample is imaged by the microscope on a detector device,
- the illumination pattern comprises at least one diffraction-limited point (L1) and is repeatedly displaced relative to the sample (P) in a plurality of steps, wherein the illumination pattern is moved over the sample (P) along a direction set by a vector **x,**

- the detector device is embodied as a pixel-comprising area detector (DE; CCD1, CCD2),
- an effective pixel dimension of the area detector (DE; CCD1, CCD2) is only a fraction of a full width at half maximum of a point spread function of the imaging, taking account of an imaging scale of the microscope,
- an increment of the displacement is smaller than an optical resolution limit of the microscope (LSM) and detection signals of the area detector are stored for each step,
**characterized in that**
- a signal intensity D

$$D(x_0) \propto \int_{-\infty}^{\infty} H(x - x_0) \cdot I(x) \cdot c(x) dx$$

 is obtained at each pixel using the detector, where $c(x)$: concentration distribution of reflecting structures or luminous fluorophores of the sample (P), $H$: point spread function of the imaging, $I(x)$: illumination intensity distribution as a function of $x$, and
- the intensity is determined in each case with n as index for the various illumination settings and j as index for the detector pixel, as a result of which a system of equations

$$D_{1,j} = \sum_j I_{1,j} \cdot c_j \cdot H_{1,j}$$
$$D_{2,j} = \sum_j I_{2,j} \cdot c_j \cdot H_{2,j}$$
$$\vdots$$
$$D_{n,j} = \sum_j I_{n,j} \cdot c_j \cdot H_{n,j}$$

results and the latter is solved at least approximately for c.

2. Method according to Claim 1, wherein the increment is less than half of the resolution limit.

3. Method according to either of the preceding claims, wherein the relative displacement is implemented perpendicular to the optical axis of the microscope (LS) for the purposes of increasing the horizontal resolution or in the direction of the optical axis for the purposes of increasing the vertical resolution.

4. Method according to at least one of the preceding claims, wherein a stop comprising an edge is displaced in an intermediate image plane of the microscope for the purposes of generating the illumination pattern.

5. Method according to any one of the preceding claims, wherein the illumination pattern scans the sample (P).

6. Method according to any one of the preceding claims, wherein a wide field illumination of the sample (P) is implemented and the illumination pattern arises by projecting a light distribution or projecting a perforated disc.

7. Method according to any one of the preceding claims, wherein the relative displacement is generated by

- displacing the sample (P) or
- displacing a scanning field or
- displacing read pixels of the detector (DE) or displacing the illumination pattern.

8. Microscope for carrying out a method according to any one of the preceding claims, comprising:

- means for generating an illumination pattern on the sample (P),
- a detection unit for detecting sample light and storage means for storing detection signals and
- means for a relative displacement between the sample (P) and the illumination pattern from a first position of the illumination pattern on the sample (P) into at least one second position,
- wherein the means for generating an illumination pattern are embodied to generate an illumination pattern that comprises at least one diffraction-limited point (L1) on the sample (P),
- wherein the detection unit comprises an area detector (DE; CCD1, CCD2),
- wherein the detection and storage means are embodied to detect and store the detection signals both in the first position and in the at least one second position,
- an effective pixel dimension of the area detector (DE; CCD1, CCD2) is only a fraction of a full width at half maximum of a point spread function of the imaging, taking account of an imaging scale of the microscope (LSM), and
- the relative displacement is less than the resolution limit of the microscope (LSM),
**characterized in that**
- provision is made for means for combining the stored detection signals by calculation and for generating a high-resolution image, said means obtaining a signal intensity D

$$D(x_0) \propto \int_{-\infty}^{\infty} H(x - x_0) \cdot I(x) \cdot c(x) dx$$

at each pixel by means of the detector, where *c(x)*: concentration distribution of reflecting structures or luminous fluorophores of the sample (P), *H*: point spread function of the imaging, *I(x)*: illumination intensity distribution as a function of **x,** and said means each determining the intensity with n as index for the various illumination settings and j as index for the detector pixel, setting up a system of equations

$$D_{1,j} = \sum_j I_{1,j} \cdot c_j \cdot H_{1,j}$$
$$D_{2,j} = \sum_j I_{2,j} \cdot c_j \cdot H_{2,j}$$
$$\vdots$$
$$D_{n,j} = \sum_j I_{n,j} \cdot c_j \cdot H_{n,j}$$

and solving the latter at least approximately for c.

9. Microscope according to Claim 8, wherein the microscope is a laser scanning microscope with a scanning illumination.

10. Microscope according to at least one of Claims 8-9, wherein the microscope is a wide field microscope with structured illumination, preferably by way of a projected intensity distribution or a Nipkow disk.

11. Microscope according to at least one of Claims 8-10, wherein the means for generating the relative displacement are means for displacing the sample or means for displacing a scanning field or means for generating a displacement of read detector elements or means for displacing the illumination pattern.

**Revendications**

1. Procédé de microscopie de fluorescence ou par réflexion pour augmenter la résolution d'un microscope à balayage laser (LSM) lors de la détection d'un échantillon (P) éclairé, dans lequel

- un motif d'éclairage est produit sur l'échantillon (P) et
- l'échantillon éclairé est visualisé par le microscope sur un dispositif détecteur,
- le motif d'éclairage comprend au moins un point limité par diffraction (L1) et est, dans plusieurs étapes répétées, décalé par rapport à l'échantillon (P), dans lequel le motif d'éclairage est déplacé au-dessus de l'échantillon (P) le long d'une direction définie par un vecteur **x,**
- le dispositif détecteur est réalisé comme un détecteur plan comprenant des pixels (DE ; CCD1, CCD2),
- en prenant en compte un grossissement du microscope, une taille de pixel effective du détecteur plan (DE ; CCD1, CCD2) n'est qu'une faible fraction d'une largeur à mi-hauteur d'une fonction de flou de point de l'imagerie,
- une largeur de pas du décalage est plus petite qu'une limite de résolution optique du microscope (LSM) et une mémorisation des signaux de détection du détecteur plan s'effectue pour chaque pas, **caractérisé en ce que**
- à chaque point d'image, est obtenue avec le détecteur une intensité de signal D

$$D(x_0) \propto \int_{-\infty}^{\infty} H(x - x_0) \cdot I(x) \cdot c(x) dx$$

avec c(**x**) : distribution de concentration des structures réfléchissantes ou des fluorophores luminescents de l'échantillon (P), *H* : fonction de flou de point de l'imagerie, *I*(**x**) : distribution de l'intensité d'éclairage en fonction de **x,** et

- n étant l'indice des différents paramètres d'éclairage et j étant l'indice du pixel de détecteur, l'intensité est respectivement déterminée, de sorte qu'un système d'équations

$$D_{1,j} = \sum_{j} I_{1,j} \cdot c_j \cdot H_{1,j}$$

$$D_{2,j} = \sum_{j} I_{2,j} \cdot c_j \cdot H_{2,j}$$

$$\vdots$$

$$D_{n,j} = \sum_{j} I_{n,j} \cdot c_j \cdot H_{n,j}$$

en résulte et celui-ci est résolu au moins approximativement selon c.

2. Procédé selon la revendication 1, dans lequel la largeur de pas est inférieure à la moitié de la limite de résolution.

3. Procédé selon l'une des revendications précédentes, dans lequel le décalage relatif s'effectue perpendiculairement à l'axe optique du microscope (LS) pour augmenter la résolution horizontale ou s'effectue dans la direction de l'axe optique pour augmenter la résolution verticale.

4. Procédé selon au moins une des revendications précédentes, dans lequel un diaphragme comportant un bord est glissé dans un plan d'image intermédiaire du microscope pour produire le motif d'éclairage.

5. Procédé selon l'une des revendications précédentes, dans lequel le motif d'éclairage balaye l'échantillon (P) .

6. Procédé selon l'une des revendications précédentes, dans lequel un éclairage à large champ de l'échantillon (P) s'effectue et le motif d'éclairage apparaît par une projection d'une distribution lumineuse ou une projection d'un disque perforé.

7. Procédé selon l'une des revendications précédentes, dans lequel le décalage relatif est obtenu par

- décalage de l'échantillon (P) ou
- décalage d'un champ de scan ou
- décalage de pixels du détecteur (DE) lus ou décalage du motif d'éclairage.

8. Microscope pour la mise en œuvre d'un procédé selon l'une des revendications précédentes, comprenant :

- des moyens de production d'un motif d'éclairage sur l'échantillon (P),
- une unité de détection afin de détecter la lumière issue de l'échantillon et un moyen d'enregistrement afin d'enregistrer les signaux de détection et
- des moyens de décalage relatif entre l'échantillon (P) et le motif d'éclairage depuis une première vers au moins une deuxième position du motif d'éclairage sur l'échantillon (P),
- dans lequel le moyen de production d'un motif d'éclairage est réalisé pour produire un motif d'éclairage comprenant au moins un point limité par diffraction (L1) sur l'échantillon (P),
- dans lequel l'unité de détection comporte un détecteur plan (DE ; CCD1, CCD2),
- dans lequel les moyens de détection et d'enregistrement sont réalisés pour la détection et l'enregistrement des signaux de détection aussi bien dans la première que dans l'au moins une deuxième position,
- en prenant en compte un grossissement du microscope (LSM), une taille de pixel effective du détecteur plan (DE ; CCD1, CCD2) n'est qu'une faible fraction d'une largeur à mi-hauteur d'une fonction de flou de point de l'imagerie, et
- le décalage relatif est plus petit que la limite de résolution optique du microscope (LSM), **caractérisé en ce que**
- des moyens de calcul des signaux de détection enregistrés et de production d'une image à haute résolution sont prévus, lesquels obtiennent une intensité de signal D

$$D(x_0) \propto \int_{-\infty}^{\infty} H(x - x_0) \cdot I(x) \cdot c(x) dx$$

à chaque point d'image, avec c(**x**) : distribution de concentration des structures réfléchissantes ou des fluorophores luminescents de l'échantillon (P), $H$ : fonction de flou de point de l'imagerie, $I$(**x**) : distribution de l'intensité d'éclairage en fonction de x, et avec n l'indice des différents paramètres d'éclairage et j l'indice du pixel de détecteur, déterminent l'intensité respective, établissent un système d'équations

$$D_{1,j} = \sum_{j} I_{1,j} \cdot c_j \cdot H_{1,j}$$

$$D_{2,j} = \sum_{j} I_{2,j} \cdot c_j \cdot H_{2,j}$$

$$\vdots$$

$$D_{n,j} = \sum_{j} I_{n,j} \cdot c_j \cdot H_{n,j}$$

et résolvent celui-ci au moins approximativement selon c.

9. Microscope selon la revendication 8, dans lequel le microscope est un microscope à balayage laser doté d'un éclairage balayant.

10. Microscope selon au moins une des revendications 8-9, dans lequel le microscope est un microscope à large champ doté d'un éclairage structuré, de préférence par le biais d'une distribution d'intensité projetée ou d'un disque de Nipkow.

11. Microscope selon au moins une des revendications 8-10, dans lequel les moyens pour produire le décalage relatif sont des moyens de décalage de l'échantillon ou des moyens de décalage du champ de scan ou des moyens de production d'un décalage des éléments détecteurs lus ou des moyens de décalage du motif d'éclairage.

f1  f2

Fluoreszierende Objekte im beugungsbegrenzten Detektionsvolumen

Beugungsbegrenzte scannende Beleuchtung

BI

DI

1a)

1b)

1c)

1d)

L1

Pr

Fig.1

Fig.2

Fig. 3

**P**

**Ov**

**G**

**F**

**TL**

u.U.

Piezo

Gitter verschiebbar

**Fluoreszenzlicht**

**DE/ CCD**

EP 2 317 362 B1

Fig. 4

Fig. 5

EP 2 317 362 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5043570 A
- US 5866911 A
- DE 4416558 C2
- US 6633432 B
- DE 10325460 A1
- US 5867604 A
- EP 1157297 B1
- US 20090147354 A1
- WO 2006127692 A

- DE 102006021317
- US 2009219607 A1
- WO 2007109861 A1
- US 20090161208 A1
- DE 19702753
- EP 500717 B2
- DE 10257423 A1
- WO 20040530558 A


**In der Beschreibung aufgeführte Nicht-Patentliteratur**

- **HEINTZMANN R. et al.** Breaking the resolution limit in light microscopy. *Briefings in functional genomics and proteomics,* 01. Januar 2006, vol. 5 (4
- **R. HEINTZMANN et al.** Saturated patterned excitation microscopy - A concept for optical resolution improvement. *J. Opt. Soc. AM. A,* 20. Februar 2011, vol. 19 (8
- **EGNER et al.** *Biophysical Journal,* November 2007, vol. 93, 3285-3290

- **HELL, S. W.** Far-Field Optical Nanoscopy. *Science,* 2007, vol. 316, 1153-1158
- **MICROSCOPY FUJITA et al.** *Phys. Rev. Lett.,* 2007
- **YAMANAKA et al.** *J. Biomed. Opt.,* 2008
- **R. HEINTZMANN ; T.M. JOVIN ; C. CREMER.** Saturated patterned excitation microscopy - A concept for optical resolution improvement. *J. Opt. Soc. Am. A,* 2002, vol. 19 (8), 1599-1609